# EUROPÄISCHE PATENTSCHRIFT

(11) **EP 2 834 117 B1**
(45) Veröffentlichungstag und Bekanntmachung des Hinweises auf die Patenterteilung: **16.11.2016**
(21) Anmeldenummer: 13725096.5
(22) Anmeldetag: 13.05.2013
(51) Int. Cl.: B60T 17/00, B01D 53/26, B60T 17/04, B60T 17/22

(54) **FLUIDLEITUNGSSYSTEM MIT EINER FLUIDAUFBEREITUNGSANORDNUNG UND VERFAHREN ZUM AUFBEREITEN EINES FLUIDS DAS DURCH EINE FLUIDLEITUNG STRÖMT SOWIE ÜBERGANGSKUPPLUNG MIT EINEM DERARTIGEN FLUIDLEITUNGSSYSTEM UND FAHRZEUGVERBUND MIT EINER DERARTIGEN ÜBERGANGSKUPPLUNG**
FLUID PIPE SYSTEM WITH FLUID PREPARATION DEVICE AND -METHOD, AND CONNECTION WITH SUCH A PIPE SYSTEM AND VEHICLE COMBINATION WITH SUCH A CONNECTION
PIPE DE FLUIDE AVEC DISPOSITIF DE PREPARATION DE FLUIDE ET UN TEL PROCEDE, ET CONNECTION DE FLUIDE AVEC UN TEL PIPE DE FLUIDE, ET COMBINAISION DE VEHICULE AVEC UN TEL CONNECTION

(30) Priorität: 31.05.2012 DE 102012209180
(43) Veröffentlichungstag der Anmeldung: 11.02.2015
(73) Patentinhaber: Siemens Aktiengesellschaft, 80333 München (DE)
(72) Erfinder: PFEIFER, Christian, 91054 Erlangen (DE)
(86) Internationale Anmeldenummer: PCT/EP2013/059805
(87) Internationale Veröffentlichungsnummer: WO 2013/178456

(56) Entgegenhaltungen:
- DE-B4- 19 911 741

## Beschreibung

Die Erfindung betrifft ein Fluidleitungssystem mit einer Fluidleitung und mit einer im Fluidströmungspfad der einen Fluidleitung angeordneten Fluidaufbereitungsanordnung, bei dem eine Fluidaufbereitungseinheit und eine Strömungsbegrenzungseinheit der einen Fluidaufbereitungsanordnung im Fluidströmungspfad eines Leitungsabschnitts der einen Fluidleitung in Reihe angeordnet sind.

Die Erfindung betrifft auch ein Verfahren zum Aufbereiten eines Fluids, das durch eine Fluidleitung strömt, mittels einer im Fluidströmungspfad der einen Fluidleitung angeordneten Fluidaufbereitungsanordnung, bei dem eine Fluidaufbereitungseinheit und eine Strömungsbegrenzungseinheit der einen Fluidaufbereitungsanordnung im Fluidströmungspfad eines Leitungsabschnitts der einen Fluidleitung in Reihe angeordnet werden.

Außerdem betrifft die Erfindung eine Übergangskupplung zum Kuppeln von Kupplungsvorrichtungen zweier Fahrzeuge mit einer Kupplungsleitung zum Verbinden von Fluidleitungen der beiden Fahrzeuge.

Ferner betrifft die Erfindung einen Fahrzeugverbund mit zumindest zwei Fahrzeugen, deren Kupplungsvorrichtungen mittels einer derartigen Übergangskupplung gekuppelt sind.

Ein gattungsgemäßes Fluidleitungssystem und ein gattungsgemäßes Verfahren zum Aufbereiten eines Fluids sind beispielsweise aus der Druckschrift DE 199 11 741 B4 bekannt, die sich mit der Regeneration der Luftaufbereitungseinheit beschäftigt.

Eine gattungsgemäße Übergangskupplung und ein gattungsgemäßer Fahrzeugverbund sind Gegenstand einer unter dem Aktenzeichen DE 102012205282.8 angemeldeten älteren deutschen Patentanmeldung, die sich mit dem Problem beschäftigt, bei einem Abschleppvorgang die Verschmutzung von Luftleitungen eines pneumatischen Bremssystems durch einströmende minderwertige Luft zu verhindern. So besteht beispielsweise beim Abschleppen eines modernen Hochgeschwindigkeitszuges das Problem, dass nicht immer ein Schleppfahrzeug mit hochwertiger Versorgungsluft zur Steuerung des pneumatischen Bremssystems des Hochgeschwindigkeitszuges zu Verfügung steht. Minderwertige Speiseluft, beispielsweise von einem Lok-Kompressor, muss dann vor dem Einströmen in das pneumatische Bremssystems des Hochgeschwindigkeitszuges gereinigt und getrocknet werden.

Ausgehend von einem Fluidleitungssystem mit den Merkmalen des Oberbegriffes des Patentanspruchs 1 (DE 199 11 741 B4) liegt der Erfindung die Aufgabe zu Grunde, das Fluidleitungssystem für den Einsatz in einer Übergangskupplung zu optimieren.

Gelöst wird diese Aufgabe durch ein Fluidleitungssystem mit den Merkmalen des Patentanspruchs 1, bei dem die eine Fluidaufbereitungsanordnung eine Bypassleitung aufweist, die den einen Leitungsabschnitt überbrückt, und bei dem im Fluidströmungspfad der einen Bypassleitung eine Strömungsdiode angeordnet ist, deren Strömungswiderstand dem Strömungswiderstand der einen Strömungsbegrenzungseinheit entgegengerichtet ist.

Der Erfindung liegt entsprechend auch die Aufgabe zu Grunde, ausgehend von einem Verfahren mit den Merkmalen des Oberbegriffes des Patentanspruchs 8 (DE 199 11 741 B4), das Kuppeln zweier Fahrzeug zu optimieren.

Gelöst wird diese Aufgabe auch durch ein Verfahren zum Aufbereiten eines Fluids mit den Merkmalen des Patentanspruchs 8, bei dem der eine Leitungsabschnitt durch eine Bypassleitung der einen Fluidaufbereitungsanordnung überbrückt wird, und bei dem im Fluidströmungspfad der einen Bypassleitung eine Strömungsdiode so angeordnet wird, dass deren Strömungswiderstand dem Strömungswiderstand der einen Strömungsbegrenzungseinheit entgegengerichtet ist. Somit wird der Fluidstrom durch die eine Bypassleitung aufgrund des Strömungswiderstandes der einen Strömungsdiode in einer Richtung begrenzt, insbesondere blockiert und in entgegen gesetzter Richtung freigegeben, während umgekehrt der Fluidstrom durch den einen Leitungsabschnitt aufgrund des Strömungswiderstandes der einen Strömungsbegrenzungseinheit in der einen Richtung freigegeben und in der entgegen gesetzten Richtung begrenzt, insbesondere blockiert wird. Es kann also in der einen Richtung nur begrenzt, vorzugsweise kein, Fluid durch die eine Bypassleitung und in der entgegen gesetzten Richtung nur begrenzt, vorzugsweise kein, Fluid durch den einen Leitungsabschnitt strömen.

Ausgehend von einer Übergangskupplung mit den Merkmalen des Oberbegriffes des Patentanspruchs 4 (DE 102012205282.8) und einem Fahrzeugverbund mit den Merkmalen des Oberbegriffes des Patentanspruchs 7 liegt der Erfindung außerdem die Aufgabe zu Grunde die Interoperabilität der Übergangskupplung und der mittels einer derartigen Übergangskupplung gekuppelten Fahrzeuge eines Fahrzeugverbundes noch weiter zu verbessern.

Gelöst wird diese Aufgabe durch eine Übergangskupplung mit den Merkmalen des Patentanspruchs 4, die ein erfindungsgemäßes Fluidleitungssystem aufweist, wobei die eine Fluidleitung des Fluidleitungssystem, im Fluidströmungspfad derer die eine Fluidaufbereitungsanordnung angeordnet ist, die eine Kupplungsleitung ist.

Ferner wird diese Aufgabe auch durch einen Fahrzeugverbund mit einer derartigen Übergangskupplung gelöst.

Unter dem hier verwendeten Begriff Strömungsdiode ist im Rahmen der vorliegenden Erfindung eine Strömungsbegrenzungseinheit zu verstehen, die keine beweglichen Teile aufweist, so wie dies beispielsweise aus der Druckschrift US 5,303,275 A bekannt ist.

Durch den Einsatz des erfindungsgemäßen Fluidleitungssystem und des erfindungsgemäßen Verfahrens kann beispielsweise bei einem Abschleppvorgang, bei dem die Eigenfluidversorgung eines abzuschleppenden Fahrzeug abgeschaltet und die Fluidversorgung in einem abzuschleppenden Fahrzeug durch Anschluss an die Fluidversorgung des abschleppenden Fahrzeugs sicher gestellt wird, beim Befüllen einer Fluidleitung des abzuschleppenden Fahrzeugs minderwertiges Fluid des abschleppenden Fahrzeugs durch die eine Fluidaufbereitungseinheit geführt werden, während beim Entleeren der einen Fluidleitung - insbesondere bei einem Bremsvorgang - das Fluid über die Bypassleitung ungehindert aus der Fluidleitung des abzuschleppenden Fahrzeugs ausströmen kann, so dass beim Bremsen der Fluidstrom nicht durch die eine Fluidaufbereitungseinheit verzögert wird.

Bei einem Abschleppvorgang kann also beispielsweise beim Befüllen einer Luftleitung eines Hochgeschwindigkeitszuges, mittels derer auch ein Bremssystem des Hochgeschwindigkeitszuges gesteuert wird, minderwertige Luft aus der Luftleitung einer Lok durch eine Fluidaufbereitungseinheit in Form einer Luftaufbereitungseinheit geführt werden, während beim Bremsen die Luft aus der Luftleitung des Hochgeschwindigkeitszuges über die Bypassleitung und die Luftleitung der Lok ungehindert in die Umgebung ausströmen kann, ohne durch die Luftaufbereitungseinheit verzögert zu werden.

Dabei wird durch den Einsatz der Strömungsdiode, die - beispielsweise im Gegensatz zu einem Rückschlagventil - keine beweglichen Teile aufweist, auf einfache Weise eine höhere Verfügbarkeit der Bremsfunktion des Bremssystems des Hochgeschwindigkeitszuges insbesondere auch bei niedrigen Temperaturen erreicht. Denn im Gegensatz zu einem Rückschlagventil können hier keine beweglichen Teile beim Auskondensieren der auf der einen Seite des Fluidleitungssystems anstehenden gesättigten Luft festfrieren und zu einem Ausbleiben der Bremsleistung führen.

Somit kann durch den Einsatz des erfindungsgemäßen Fluidleitungssystem und des erfindungsgemäßen Verfahrens in vorteilhafter Weise die Lebensdauer und Effizienz der Luftleitungen der Fahrzeuge und der an diese Luftleitungen gekoppelten Systeme der Fahrzeuge erhöht werden. Die Strömungsdioden, die keine beweglichen Teile aufweisen, sind wartungsarm und vor allem ausfallarm.

Es wird als vorteilhaft angesehen, wenn bei dem erfindungsgemäßen Fluidleitungssystem eine weitere Fluidleitung und eine im Fluidströmungspfad der weiteren Fluidleitung angeordnete weitere Fluidaufbereitungsanordnung vorgesehen sind, wenn eine weitere Fluidaufbereitungseinheit und eine weitere Strömungsbegrenzungseinheit im Fluidströmungspfad eines weiteren Leitungsabschnitts der weiteren Fluidleitung in Reihe angeordnet sind, wenn die weitere Fluidaufbereitungsanordnung eine weitere Bypassleitung aufweist, die den weiteren Leitungsabschnitt überbrückt, und wenn im Fluidströmungspfad der weiteren Bypassleitung eine weitere Strömungsdiode angeordnet ist, deren Strömungswiderstand dem Strömungswiderstand der weiteren Strömungsbegrenzungseinheit entgegengerichtet ist.

Vorzugsweise ist bei dem erfindungsgemäßen Fluidleitungssystem die eine Strömungsbegrenzungseinheit der einen Fluidaufbereitungsanordnung und/oder die weitere Strömungsbegrenzungseinheit der weiteren Fluidaufbereitungsanordnung ein Rückschlagventil oder eine Strömungsdiode.

Entsprechend wird es als vorteilhaft angesehen, wenn bei der erfindungsgemäßen Übergangskupplung eine weitere Kupplungsleitung zum Verbinden weiterer Fluidleitungen der beiden Fahrzeuge vorgesehen ist, wobei die weitere Fluidleitung des Fluidleitungssystem, im Fluidströmungspfad derer die weitere Fluidaufbereitungsanordnung angeordnet ist, die weitere Kupplungsleitung ist.

Dabei weist die Übergangskupplung vorzugsweise eine erste Verbindungseinrichtung zum lösbaren Verbinden der Übergangskupplung mit einer ersten der Kupplungsvorrichtungen, eine zweite Verbindungseinrichtung zum lösbaren Verbinden der Übergangskupplung mit einer zweiten der Kupplungsvorrichtungen und einen Kupplungsträger zum Verbinden der ersten Verbindungseinrichtung mit der zweiten Verbindungseinrichtung auf, wobei die eine Fluidaufbereitungsanordnung und/oder die weitere Fluidaufbereitungsanordnung Teil einer vom Kupplungsträger gehaltenen Fluidaufbereitungseinrichtung sind.

Unter dem hier verwendeten Bergriff Verbindungseinrichtung ist allgemein eine Schnittstelle zwischen dem Kupplungsträger der Übergangskupplung einerseits und der mit der Übergangskupplung zu verbindenden Kupplungsvorrichtung eines Fahrzeugs andererseits zu verstehen. Unter der ersten Verbindungseinrichtung wird daher also eine Schnittstelle verstanden, die kompatibel mit der Kupplungsvorrichtung eines ersten der Fahrzeuge ist und die ausgelegt ist, eine lösbare Verbindung mit der Kupplungsvorrichtung des ersten Fahrzeugs auszubilden. Entsprechend wird unter der zweiten Verbindungseinrichtung eine Schnittstelle verstanden, die kompatibel mit der Kupplungsvorrichtung eines zweiten der Fahrzeuge ist und die ausgelegt ist, eine lösbare Verbindung mit der Kupplungsvorrichtung des zweiten Fahrzeugs auszubilden. Im Rahmen der vorliegenden Erfindung können die Kupplungsvorrichtungen der beiden Fahrzeuge gleicher oder verschiedener Bauart sein. Entsprechend können im Rahmen der vorliegenden Erfindung auch die beiden Verbindungseinrichtungen der Übergangskupplung kompatibel mit Kupplungsvorrichtungen gleicher Bauart sein oder die erste Verbindungseinrichtung kann zu einer Kupplungsvorrichtung einer ersten Bauart kompatibel sein, während die zweite Verbindungseinrichtung kompatibel zu einer Kupplungsvorrichtung einer zweiten Bauart ist, wobei die beiden Bauarten verschieden sind.

Ferner wird unter dem hier verwendeten Begriff Kupplungsvorrichtung eines Fahrzeugs eine Vorrichtung des Fahrzeugs verstanden, die eine Schnittstelle aufweist, die kompatibel mit einer Verbindungseinrichtung der Übergangskupplung ist und die ausgelegt ist, eine lösbare Verbindung mit der Verbindungseinrichtung der Übergangskupplung auszubilden um Zugkräfte oder Zug- und Druckkräften zu übertragen. Diese Schnittstelle des Fahrzeugs kann dabei von einer Kupplung oder von einer mit der Kupplung verbundenen Adapterkupplung gebildet sein. Die Schnittstelle zur Übergangskupplung kann also eine Kupplungs-Verbindungseinrichtung oder eine Adapter-Verbindungseinrichtung sein.

Eine Ausführungsform der Verbindungseinrichtung kann beispielsweise ein Kupplungsorgan in Form eines Kuppelverschlusses zum lösbaren Verbinden der Übergangskupplung mit einem Kupplungskopf einer automatischen Mittelpufferkupplung (z.B. einer Scharfenbergkupplung) aufweisen. Eine andere Ausführungsform der Verbindungseinrichtung kann beispielsweise ein Kupplungsorgan in Form eines Kupplungsbügels, der in einen Zughaken einer Schraubenkupplung einsetzbar ist, aufweisen. Für die Verbindungseinrichtung (den Verbindungsbereich) kommen aber auch andere Ausführungsformen in Frage.

Bei dem erfindungsgemäßen Verfahren wird es entsprechend als vorteilhaft angesehen, wenn ein Fluid, das durch eine weitere Fluidleitung strömt, mittels einer im Fluidströmungspfad der weiteren Fluidleitung angeordneten weiteren Fluidaufbereitungsanordnung aufbereitet wird, wenn eine weitere Fluidaufbereitungseinheit und eine weitere Strömungsbegrenzungseinheit der weiteren Fluidaufbereitungsanordnung im Fluidströmungspfad eines weiteren Leitungsabschnitts der weiteren Fluidleitung in Reihe angeordnet werden, wenn der weitere Leitungsabschnitt durch eine weitere Bypassleitung der weiteren Fluidaufbereitungsanordnung überbrückt wird und wenn im Fluidströmungspfad der weiteren Bypassleitung eine weitere Strömungsdiode so angeordnet wird, dass deren Strömungswiderstand dem Strömungswiderstand der weiteren Strömungsbegrenzungseinheit entgegengerichtet ist.

Vorteilhaft ist es dabei, wenn die eine Fluidleitung, im Fluidströmungspfad derer die eine Fluidaufbereitungsanordnung angeordnet wurde, als eine Kupplungsleitung ausgebildet wird, die Teil einer Kupplungsvorrichtung ist, die zum Kuppeln zweier Fahrzeuge dient, wobei Fluidleitungen der beiden Fahrzeuge mittels der einen Kupplungsleitung verbunden werden, und/oder wenn die weitere Fluidleitung, im Fluidströmungspfad derer die weitere Fluidaufbereitungsanordnung angeordnet wurde, als eine weitere Kupplungsleitung ausgebildet wird, die Teil der Kupplungsvorrichtung ist, die zum Kuppeln der beiden Fahrzeuge dient, wobei weitere Fluidleitungen der beiden Fahrzeuge mittels der weiteren Kupplungsleitung verbunden werden.

Vorzugsweise werden Hauptluftleitung (kurz HL oder HLL) und/oder Hauptbehälterluftleitung (kurz HB oder HBL) des abzuschleppenden Fahrzeugs mit einer Hauptluftleitung und/oder einer Hauptbehälterluftleitung des abschleppenden Fahrzeugs unter Zwischenschaltung der zugeordneten Fluidaufbereitungsanordnungen in Form von Luftaufbereitungsanordnungen gekuppelt und das Luftsystem des abzuschleppenden Fahrzeugs mit der Luft des abschleppenden Fahrzeugs aufgefüllt, wobei die Luft in der einen Richtung vor dem Eintritt in das abzuschleppende Fahrzeug durch die eine Fluidaufbereitungseinheit und/oder durch die weitere Fluidaufbereitungseinheit einer Aufbereitung (Reinigung) unterliegt und in der entgegen gesetzten Richtung über die eine Bypassleitung und/oder die weitere Bypassleitung ungehindert aus der Hauptluftleitung und/oder aus der Hauptbehälterluftleitung des abzuschleppenden Fahrzeugs ausströmen kann.

Bei einem Abschleppvorgang muss also keine Verschmutzung des Luftsystems des abzuschleppenden Fahrzeugs und auch kein Sicherheitsrisiko hinsichtlich der Bremsleistung in Kauf genommen werden.

Um Luft mit niedriger Feuchtigkeit bereitzustellen, wird es als vorteilhaft angesehen, wenn die eine Fluidaufbereitungseinheit eine Luftaufbereitungseinheit ist und einen Lufttrockner aufweist und/oder die weitere Fluidaufbereitungseinheit eine weitere Luftaufbereitungseinheit ist und einen weiteren Lufttrockner aufweist. Dabei ist es von Vorteil, wenn dem Lufttrockner der einen Luftaufbereitungseinheit eine Kondensatsammelanlage zugeordnet ist und/oder dem Lufttrockner der weiteren Luftaufbereitungseinheit eine weitere Kondensatsammelanlage zugeordnet. Durch das Aufbereiten der Luft durch den Lufttrockner - also durch die Lufttrocknung - sind die Luftleitungen HL und HB und die daran angeschlossenen Systeme vor einem Einfrieren und vor innerer Korrosion geschützt.

Um ferner Luft mit hoher Reinheit bereitzustellen, wird es außerdem als vorteilhaft angesehen, wenn die eine Luftaufbereitungseinheit einen Filter aufweist und/oder die weitere Luftaufbereitungseinheit einen weiteren Filter aufweist, wobei die Filter vorzugsweise als Ölfilter ausgebildet sind. Durch das Aufbereiten der Luft durch die Filter - also durch die Luftfilterung - sind die Luftleitungen HL und HB und die daran angeschlossenen Systeme effizient vor Beeinträchtigungen, die beispielsweise durch Schmutzpartikel und Kompressoröl verursacht werden könnten, geschützt.

Zur weiteren Erläuterung der Erfindung sind in der
- Figur 1: ein erfindungsgemäßer Fahrzeugverbund mit zwei Fahrzeugen in Form von Schienenfahrzeugen mit Kupplungsvorrichtungen in Form von Kupplungen gleicher Bauart, wobei die Kupplungen mittels einer erfindungsgemäßen Übergangskupplung gekuppelt sind, die ein erfindungsgemäßes Fluidleitungssystem aufweist, in der
- Figur 2: ein zweiter erfindungsgemäßer Fahrzeugverbund mit zwei Fahrzeugen in Form von Schienenfahrzeugen mit Kupplungsvorrichtungen in Form von Kupplungen verschiedener Bauart, wobei die Kupplungen mittels einer erfindungsgemäßen Übergangskupplung gekuppelt sind, in der
- Figur 3: ein dritter erfindungsgemäßer Fahrzeugverbund mit zwei Fahrzeugen in Form von Schienenfahrzeugen mit Kupplungsvorrichtungen, die Kupplungen verschiedener Bauart aufweisen, wobei die Kupplungsvorrichtung eines ersten der beiden Fahrzeuge zusätzlich eine Adapterkupplung aufweist und wobei die Adapterkupplung des ersten Fahrzeugs und die Kupplung des zweiten Fahrzeugs mittels einer erfindungsgemäßen Übergangskupplung gekuppelt sind, in den
- Figuren 4 bis 6: Ausschnitte der Figuren 1 bis 3 mit den dort gezeigten erfindungsgemäßen Übergangskupplungen, in die jeweils eine Fluidaufbereitungseinrichtung integriert ist, in den

Figuren 7 bis 9 drei Ausführungsvarianten der Fluidaufbereitungseinrichtung mit jeweils zumindest einer Fluidaufbereitungsanordnung und in den

Figuren 10 und 11 zwei Ausführungsformen der Fluidaufbereitungsanordnung.

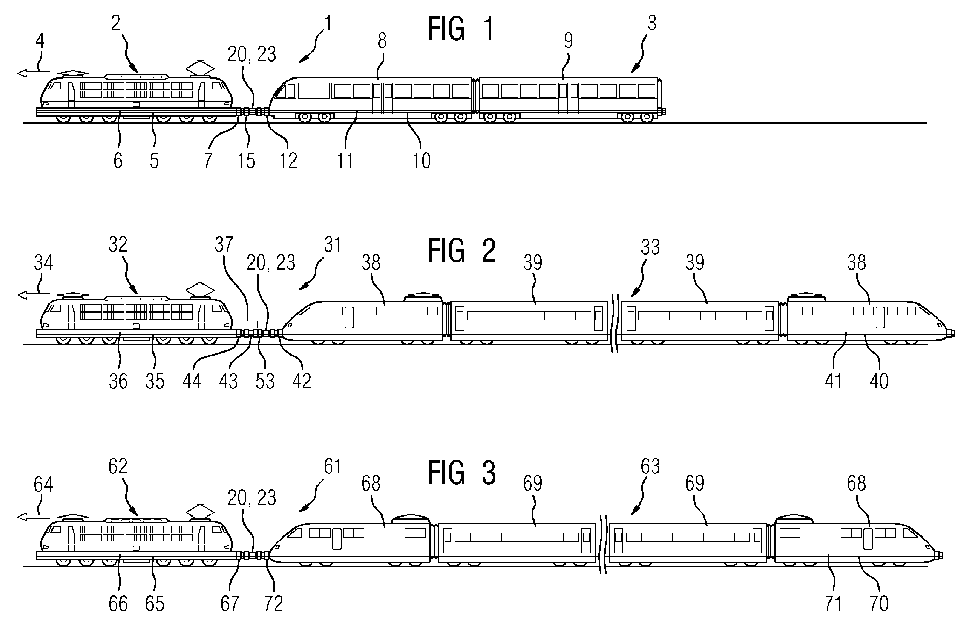

Die Figur 1 zeigt einen erfindungsgemäßen Fahrzeugverbund 1 mit zwei Fahrzeugen 2, 3 in Form von Schienenfahrzeugen bei einem Abschleppvorgang in einer Abschlepprichtung 4. Ein erstes 2 der beiden Schienenfahrzeuge ist dabei ein abschleppendes Fahrzeug - hier nur beispielhaft in Form einer Lok - mit ersten Fluidleitungen 5, 6 in Form von Luftleitungen und mit einer ersten Kupplungsvorrichtung 7. Bei den ersten Fluidleitungen handelt es sich um eine mit der Bezugszahl 5 bezeichnete Hauptluftleitung (kurz HL oder HLL) und um eine mit der Bezugszahl 6 bezeichnete Hauptbehälterluftleitung (kurz HB oder HBL), die an einen hier nicht gezeigten Hauptluftbehälter angeschlossene ist. Das zweite Fahrzeug 3 ist ein abgeschlepptes Fahrzeug - hier nur beispielhaft in Form eines Reisezuges, der einen Triebwagen 8 und einen Laufwagen 9 aufweist - mit zweiten Fluidleitungen 10, 11 in Form von Luftleitungen und mit einer zweiten Kupplungsvorrichtung 12. Auch hier ist eine 10 der Fluidleitungen eine Hauptluftleitung (kurz HL oder HLL) und die andere 11 eine Hauptbehälterluftleitung (kurz HB oder HBL).

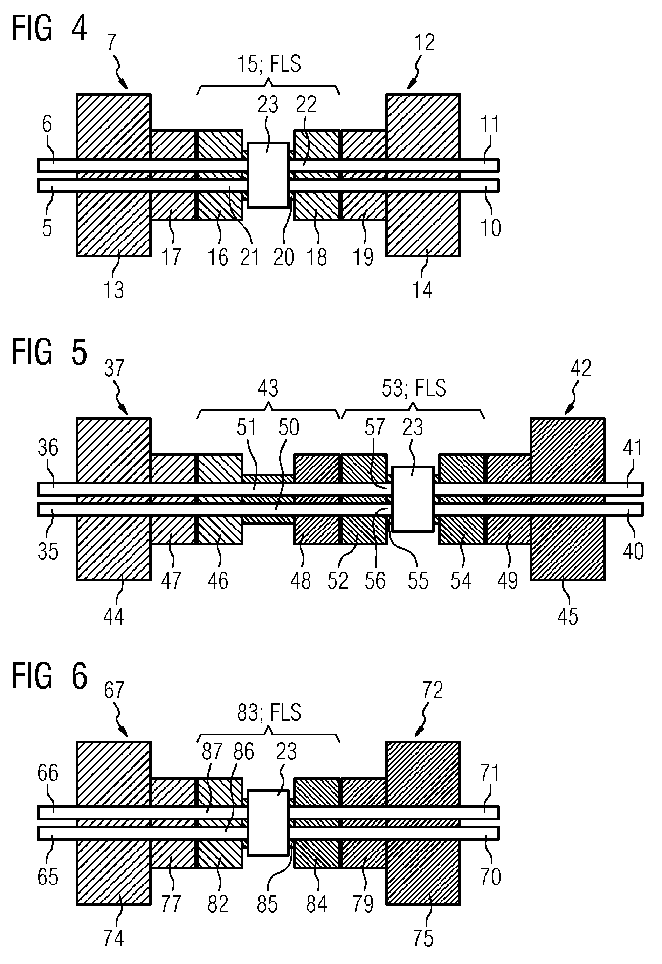

Gemäß Figur 4 bestehen die Kupplungsvorrichtungen 7, 12 der beiden Fahrzeuge aus Kupplungen 13, 14 gleicher Bauart. Bei den Kupplungen 13, 14 handelt es sich beispielsweise um Kupplungen der unter der Bezeichnung "SA-3" bekannten Bauart, mit denen häufig russische Schienenfahrzeuge ausgestattet sind und die im Weiteren kurz als SA-3-Kupplungen bezeichnet sind. Die beiden SA-3-Kupplungen 13, 14 sind mittels einer erfindungsgemäßen Übergangskupplung 15 gekuppelt.

Gemäß Figur 4 weist die Übergangskupplung 15 zum Einen eine erste Verbindungseinrichtung 16 zum lösbaren Verbinden der Übergangskupplung 15 mit einer Kupplungs-Verbindungseinrichtung 17 der ersten Kupplung 13 und zum Anderen eine zweite Verbindungseinrichtung 18 zum lösbaren Verbinden der Übergangskupplung 15 mit einer Kupplungs-Verbindungseinrichtung 19 der zweiten Kupplung 14 auf.

Weiterhin weist die Übergangskupplung 15 einen Kupplungsträger 20 auf, der die beiden Verbindungseinrichtung 16, 18 der Übergangskupplung 15 verbindet. Dieser Kupplungsträger 20 ist zumindest teilweise als Kupplungsgehäuse ausgebildet.

Ferner ist die Übergangskupplung 15 mit einem ein Fluidleitungssystem FLS in Form eines Luftleitungssystems versehen. Das Fluidleitungssystem FLS weist eine Fluidleitung 21 in Form einer Kupplungsleitung zum Verbinden der Hauptluftleitungen 5, 10 der beiden Fahrzeuge und eine weiteren Fluidleitung 22 in Form einer weiteren Kupplungsleitung zum Verbinden der Hauptbehälterluftleitungen 6, 11 der beiden Fahrzeuge auf.

Erfindungsgemäß ist die Übergangskupplung 15 außerdem mit einer Fluidaufbereitungseinrichtung 23 in Form einer Luftaufbereitungseinrichtung versehen, die vom Kupplungsträger 20 gehalten ist. Vorzugsweise ist die Fluidaufbereitungseinrichtung 23 in dem als Kupplungsgehäuse ausgebildeten Teil des Kupplungsträgers 20 aufgenommen.

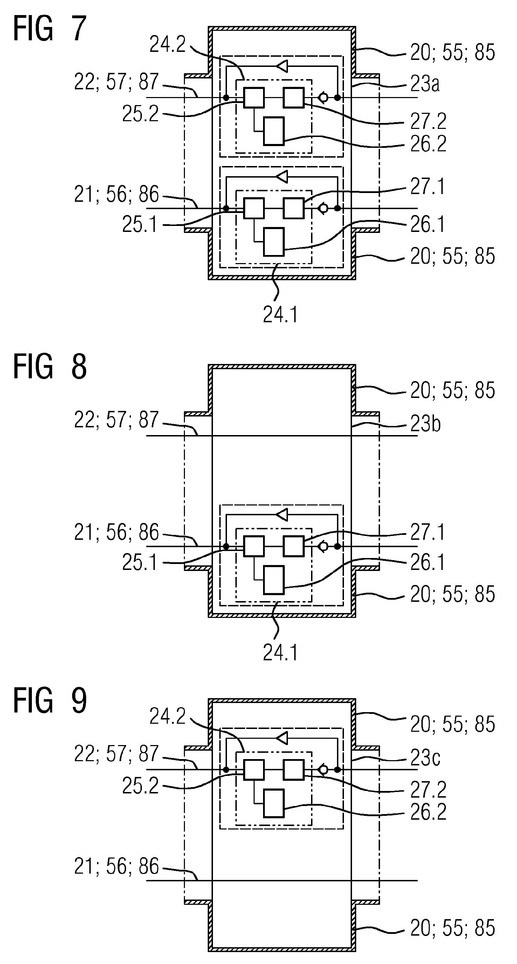

Je nach Ausführungsvariante 23a; 23b; 23c kann die Fluidaufbereitungseinrichtung 23 eine Fluidaufbereitungsanordnung FAA.1 in Form einer Luftaufbereitungsanordnung und/oder eine weitere Fluidaufbereitungsanordnung FAA.2 in Form einer weiteren Luftaufbereitungsanordnung aufweisen (vgl. Figuren 7 bis 9).

So zeigt die Figur 7 eine erste 23a der Ausführungsvarianten der Fluidaufbereitungseinrichtung 23 mit zwei Fluidaufbereitungsanordnungen FAA.1 und FAA.2, wobei eine FAA.1 der Fluidaufbereitungsanordnungen im Fluidströmungspfad (hier in Form eines Luftströmungspfades) der einen Kupplungsleitung 21 angeordnet ist, die zum Verbinden der Hauptluftleitungen dient und wobei die weitere FAA.2 der Fluidaufbereitungsanordnungen im weiteren Fluidströmungspfad (hier in Form eines weiteren Luftströmungspfades) der weiteren Kupplungsleitung 22 angeordnet ist, die zum Verbinden der Hauptbehälterluftleitungen der beiden Fahrzeuge dient.

Die Figur 8 zeigt eine zweite 23b der Ausführungsvariante der Fluidaufbereitungseinrichtung 23 mit nur einer Fluidaufbereitungsanordnung FAA.1, die hier im Luftströmungspfad der einen Kupplungsleitung 21 angeordnet ist, die zum Verbinden der Hauptluftleitungen dient.

Bei der in Figur 9 gezeigten dritten 23c der Ausführungsvarianten der Fluidaufbereitungseinrichtung 23, die mit nur einer Fluidaufbereitungsanordnung FAA.2 versehen ist, ist die Fluidaufbereitungsanordnung FAA.2 im Luftströmungspfad der weiteren Kupplungsleitung 22 angeordnet, die zum Verbinden der Hauptbehälterluftleitungen der beiden Fahrzeuge dient.

Die eine Fluidaufbereitungsanordnung FAA.1 weist eine Fluidaufbereitungseinheit 24.1 in Form einer Luftaufbereitungseinheit, eine erste Strömungsbegrenzungseinheit SBE.1 und eine zweite Strömungsbegrenzungseinheit in Form einer Strömungsdiode SD.1 auf. Ferner weist die weitere Fluidaufbereitungsanordnungen FAA.2 eine weitere Fluidaufbereitungseinheit 24.2 in Form einer weiteren Luftaufbereitungseinheit, eine weitere erste Strömungsbegrenzungseinheit SBE.2 und eine weitere zweite Strömungsbegrenzungseinheit in Form einer Strömungsdiode SD.2 auf

Dabei sind die eine Fluidaufbereitungseinheit 24.1 und die eine erste Strömungsbegrenzungseinheit SBE.1 im Fluidströmungspfad eines Leitungsabschnitts LA.1 der einen Kupplungsleitung 21; 56; 86 in Reihe angeordnet. Die eine Strömungsdiode SD.1 ist im Fluidströmungspfad einer Bypassleitung BL.1 angeordnet, die den einen Leitungsabschnitt (LA.1) überbrückt, wobei der Strömungswiderstand der einen Strömungsdiode SD.1 dem Strömungswiderstand der einen Strömungsbegrenzungseinheit SBE.1 entgegengerichtet ist.

Außerdem sind die weitere Fluidaufbereitungseinheit 24.2 und die weitere erste Strömungsbegrenzungseinheit SBE.2 im Fluidströmungspfad eines weiteren Leitungsabschnitts LA.2 der weiteren Kupplungsleitung 22; 57; 87 in Reihe angeordnet. Die weitere Strömungsdiode SD.1 ist im Fluidströmungspfad einer weiteren Bypassleitung BL.2 angeordnet, die den weiteren Leitungsabschnitt (LA.2) überbrückt, wobei der Strömungswiderstand der weiteren Strömungsdiode SD.2 dem Strömungswiderstand der weiteren ersten Strömungsbegrenzungseinheit SBE.2 entgegengerichtet ist.

Im Fluidströmungspfad der Bypassleitungen BL.1 bzw. BL.2 kommt also eine Strömungsdiode SD.1 bzw. SD.2 zum Einsatz, die so eingebaut ist, dass beim Befüllen der HL bzw. HB des abzuschleppenden Fahrzeuges die Strömung in einer Richtung R1.1 bzw. R1.2 von der HL bzw. HB des abschleppenden Fahrzeugs in die HL bzw. HB des abzuschleppenden Fahrzeugs gedrosselt wird. Je nach Wahl und Ausarbeitung der Strömungsdiode SD.1 bzw. SD.2 strömt dann aufgrund des Strömungswiderstandes in der Strömungsdiode ein Großteil der minderwertigen Luft durch die Luftaufbereitungseinheit 24.1 bzw. 24.2.

Bei einer Bremsanforderung wird dann die Strömungsdiode SD.1 bzw. SD.2 in entgegen gesetzter Richtung R2.1 bzw. R2.2 durchströmt. In dieser entgegen gesetzten Richtung R2.1 bzw. R2.2 ist dann der Widerstand der Strömungsdiode SD.1 bzw. SD.2 geringer und, bei verringerter Geschwindigkeit beim Abschleppen, eine ausreichende Ansprechzeit der Bremsen im abzuschleppenden Fahrzeug erreichbar.

Der Abschleppfall ist ein Betriebssonderfall. Für den Fahrbetrieb ist das Einsetzen von Ventilen oder anderen Komponenten direkt in die HL eines Fahrzeugs untersagt. Für den seltenen Fall des Abschleppens und der fehlenden Verfügbarkeit hochwertiger Luft ist der beschriebene Einsatz der Strömungsdioden direkt in die HL bzw. HBL ein möglicher Kompromiss zur sicheren Räumung der Schienenwege.

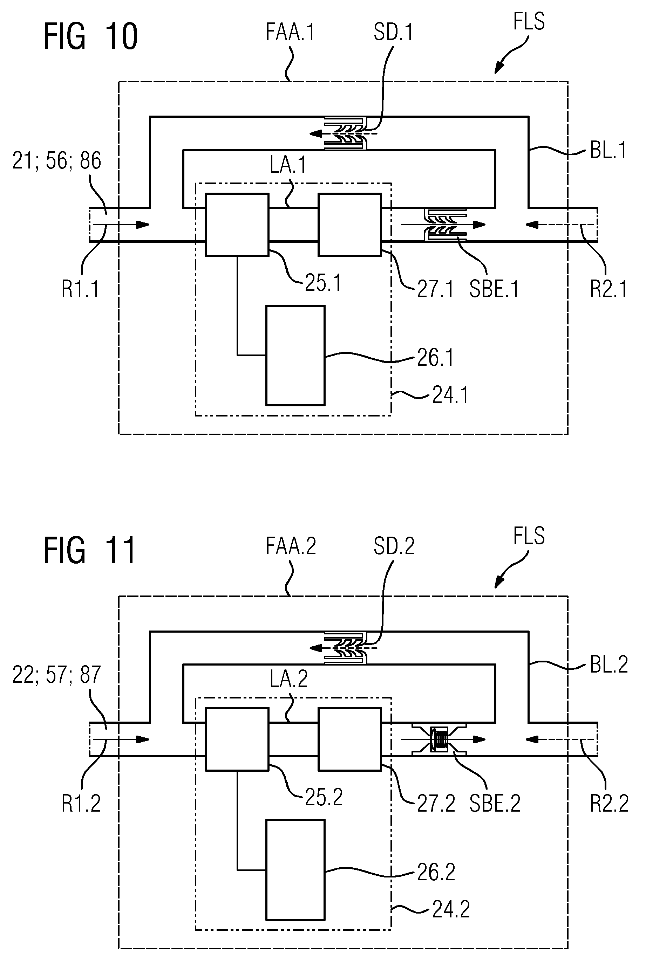

Bei der in Figur 10 gezeigten Ausführungsform der Fluidaufbereitungsanordnung FAA.1 ist die eine erste Strömungsbegrenzungseinheit SBE.1 eine Strömungsdiode. Bei der in Figur 11 gezeigten Ausführungsform der weiteren Fluidaufbereitungsanordnung FAA.2 ist die weitere erste Strömungsbegrenzungseinheit SBE.2 ein Rückschlagventil.

Die gezeigten Fluidaufbereitungseinheiten 24.1 bzw. 24.2 weisen jeweils einen Lufttrockner 25.1 bzw. 25.2 auf. Außerdem ist jedem der Lufttrockner 25.1; 25.2 jeweils eine Kondensatsammelanlage 26.1; 26.2 zugeordnet. Ferner weisen die gezeigten Fluidaufbereitungseinheiten 24.1; 24.2 jeweils einen Filter - hier in Form eines Ölfilters 27.1; 27.2 - auf, der dem Lufttrockner 25.1; 25.2 in der Strömungsrichtung beim Befüllen des Luftsystems des abzuschleppenden Fahrzeugs nachgeordnet ist. Anstelle des gezeigten Ölfilters 27.1; 27.2 oder zusätzlich zu dem gezeigten Ölfilter kann aber bei den gezeigten Fluidaufbereitungseinheiten 24.1; 24.2 auch ein anderer Filter vorgesehen sein, der andere Schutzpartikel aus der Luft filtert.

Die Figur 2 zeigt einen weiteren erfindungsgemäßen Fahrzeugverbund 31 mit zwei Fahrzeugen 32, 33 in Form von Schienenfahrzeugen bei einem Abschleppvorgang in einer Abschlepprichtung 34. Auch hier ist ein erstes 32 der beiden Schienenfahrzeuge ein abschleppendes Fahrzeug in Form einer Lok mit ersten Fluidleitungen 35, 36 und mit einer ersten Kupplungsvorrichtung 37. Bei den ersten Fluidleitungen handelt es sich wieder um eine Hauptluftleitung (kurz HL oder HLL) 35 und um eine an einen Hauptluftbehälter angeschlossene Hauptbehälterluftleitung (kurz HB oder HBL) 36. Das zweite Fahrzeug 33 ist ein abgeschlepptes Fahrzeug - hier in Form eines modernen Hochgeschwindigkeits-Reisezuges, der zwei Triebwagen 38 und zwei Laufwagen 39 aufweist - mit zweiten Fluidleitungen 40, 41 und mit einer zweiten Kupplungsvorrichtung 42. Auch hier ist eine 40 der zweiten Fluidleitungen eine Hauptluftleitung (kurz HL oder HLL) und die andere 41 eine Hauptbehälterluftleitung (kurz HB oder HBL).

Gemäß Figur 5 besteht die erste Kupplungsvorrichtung 37 des ersten Fahrzeugs beispielhaft aus einer mit einer Adapterkupplung 43 versehene SA-3-Kupplung 44. Bei der zweiten Kupplungsvorrichtung 42 des zweiten Fahrzeugs (des Hochgeschwindigkeits-Reisezuges) handelt es sich beispielhaft wieder um eine als "Scharfenbergkupplung" bekannte Kupplung 45, deren Bauart sich von der Bauart der SA-3-Kupplung 44 unterscheidet.

Gemäß Figur 5 dient die Adapterkupplung 43 zum Adaptieren von Kupplungen unterschiedlicher Bauart. Hier dient die Adapterkupplung 43 beispielsweise zum Adaptieren der SA-3-Kupplung 44 mit einer Scharfenbergkupplung. Daher ist eine erste Adapter-Verbindungseinrichtung 46 der Adapterkupplung 43 kompatibel zu einer Kupplungs-Verbindungseinrichtung 47 der SA-3-Kupplung 44 des ersten Fahrzeugs. Eine zweite Adapter-Verbindungseinrichtung 48 der Adapterkupplung 43 ist hier kompatibel zu einer Kupplungs-Verbindungseinrichtung 49 der Scharfenbergkupplung 45 des zweiten Fahrzeugs, so dass die beiden Fahrzeuge 32, 33 auch ohne Zwischenschaltung einer erfindungsgemäßen Übergangskupplung miteinander verbunden werden könnten.

Eine Adapterleitung 50 der Adapterkupplung 43 ist mit der Hauptluftleitung 35 verbunden und bildet damit ein Ende der Hauptluftleitung des ersten Fahrzeugs und eine weitere Adapterleitung 51 ist mit der Hauptbehälterluftleitung 36 verbunden und bildet damit ein Ende der Hauptbehälterluftleitung des ersten Fahrzeugs.

Die zweite Adapter-Verbindungseinrichtung 48 ist aber insbesondere kompatibel zu einer ersten Verbindungseinrichtung 52 einer erfindungsgemäßen Übergangskupplung 53. Die Adapterkupplung 43 weist also zum Einen die erste Adapter-Verbindungseinrichtung 46 zum lösbaren Verbinden der Adapterkupplung 43 mit einer Kupplungs-Verbindungseinrichtung 47 der SA-3-Kupplung 44 und zum Anderen die zweite Adapter-Verbindungseinrichtung 48 zum lösbaren Verbinden der Adapterkupplung 43 mit der Übergangskupplung 53 auf.

Die Übergangskupplung 53 weist zum Einen die erste Verbindungseinrichtung 52 zum lösbaren Verbinden der Übergangskupplung 53 mit der ersten Kupplungsvorrichtung 37 auf, wobei hier seitens des ersten Fahrzeugs die zweite Adapter-Verbindungseinrichtung 48 der Adapterkupplung 43 als Schnittstelle dient. Die Übergangskupplung 53 weist zum Anderen eine zweite Verbindungseinrichtung 54 zum lösbaren Verbinden der Übergangskupplung 53 mit der zweiten Kupplungsvorrichtung 42 auf, wobei hier seitens des zweiten Fahrzeugs die Kupplungs-Verbindungseinrichtung 49 der Scharfenbergkupplung 45 des zweiten Fahrzeugs als Schnittstelle dient.

Weiterhin weist die Übergangskupplung 53 einen Kupplungsträger 55 auf, der die beiden Verbindungseinrichtung 52, 54 der Übergangskupplung 53 verbindet. Dieser Kupplungsträger 55 ist zumindest teilweise als Kupplungsgehäuse ausgebildet.

Weiterhin weist die Übergangskupplung wieder ein Fluidleitungssystem FLS mit Fluidleitungen 56, 57 auf.

Die Fluidleitung 56 ist eine Kupplungsleitung zum Verbinden der Hauptluftleitungen der beiden Fahrzeuge und die weitere Fluidleitung 57 ist eine weitere Kupplungsleitung zum Verbinden der Hauptbehälterluftleitungen der beiden Fahrzeuge. Erfindungsgemäß ist die Übergangskupplung 53 außerdem mit einer Fluidaufbereitungseinrichtung 23 in Form einer Luftaufbereitungseinrichtung versehen, die vom Kupplungsträger 55 gehalten ist.

Die Figur 3 zeigt einen dritten erfindungsgemäßen Fahrzeugverbund 61 mit zwei Fahrzeugen 62, 63 in Form von Schienenfahrzeugen bei einem Abschleppvorgang in einer Abschlepprichtung 64. Bei den Schienenfahrzeugen handelt es sich im Wesentlichen um Fahrzeuge, die den in der Figur 2 gezeigten Fahrzeugen entsprechen wobei jedoch die Kupplungsvorrichtung des ersten Fahrzeugs hier keine Adapterkupplung aufweist.

Ein erstes 62 der beiden Schienenfahrzeuge ist also ein abschleppendes Fahrzeug und mit ersten Fluidleitungen 65, 66 und einer ersten Kupplungsvorrichtung 67. Das zweite Fahrzeug 63 ist ein abgeschlepptes Fahrzeug mit zwei Triebwagen 68, zwei Laufwagen 69, zweiten Fluidleitungen 70, 71 und einer zweiten Kupplungsvorrichtung 72.

Bei dem ersten Fahrzeug 62 (der Lok) dient somit eine SA-3-Kupplung 74 als erste Kupplungvorrichtung. Bei der zweiten Kupplungvorrichtung 72 des zweiten Fahrzeugs 63 (des Hochgeschwindigkeits-Reisezuges) dient wieder eine Scharfenbergkupplung 75 als Kupplungsvorrichtung.

Gemäß Figur 6 ist die erfindungsgemäße Übergangskupplung 83 hier geeignet ausgebildet, die beiden Kupplungsvorrichtungen verschiedener Bauart - also die SA-3-Kupplung 74 der Kupplungsvorrichtung 67 und die Scharfenbergkupplung 75 der Kupplungsvorrichtung 72 - zu verbinden. Hierzu weist die Übergangskupplung 83 zum Einen eine erste Verbindungseinrichtung 82 zum lösbaren Verbinden der Übergangskupplung 83 mit der ersten Kupplungseinrichtung 67 auf, die kompatibel zu der Kupplungs-Verbindungseinrichtung 77 der SA-3-Kupplung 74 ist. Zum Anderen weist die Übergangskupplung 83 eine zweite Verbindungseinrichtung 84 zum lösbaren Verbinden der Übergangskupplung mit der zweiten Kupplungsvorrichtung 72 auf, die kompatibel zu der Kupplungs-Verbindungseinrichtung 79 der Scharfenbergkupplung 75 ist.

Auch diese Übergangskupplung 83 weist wieder ein Fluidleitungssystem FLS mit Fluidleitungen 86, 87 auf.

Die Fluidleitung 86 ist eine Kupplungsleitung zum Verbinden der Hauptluftleitungen 65, 70 der beiden Fahrzeuge und die weitere Fluidleitung 87 ist eine weitere Kupplungsleitung 87 zum Verbinden der Hauptbehälterluftleitungen 66, 71 der beiden Fahrzeuge. Erfindungsgemäß ist die Übergangskupplung 83 wieder mit einer Fluidaufbereitungseinrichtung 23 in Form einer Luftaufbereitungseinrichtung versehen, die vom Kupplungsträger 85 gehalten ist.

Auch die in den Figur 5 und 6 gezeigten Fluidaufbereitungseinrichtungen 23 können gemäß einer der in den Figuren 7 bis 9 gezeigten Ausführungsvarianten ausgebildet sein. Je nach Ausführungsvariante 23a, 23b oder 23c kann also sowohl die in der Figur 5 gezeigte Fluidaufbereitungseinrichtung 23 als auch die Figur 6 gezeigte Fluidaufbereitungseinrichtung 23 eine oder zwei Fluidaufbereitungseinheiten aufweisen.

Beim Kuppeln der beiden Fahrzeuge 2, 3; 31, 32; 61, 62 wird die Übergangskupplung 15; 53; 83 mittels ihrer ersten Verbindungseinrichtungen lösbar mit der ersten der Kupplungsvorrichtungen und mittels ihrer zweiten Verbindungseinrichtung lösbar mit der zweiten der Kupplungsvorrichtungen verbunden.

Außerdem werden beim Kuppeln die einen Fluidleitungen (die Hauptluftleitungen) der beiden Fahrzeuge mittels der einen Kupplungsleitung verbunden und/oder die weiteren Fluidleitungen (die Hauptbehälterluftleitungen) der beiden Fahrzeuge mittels der weiteren Kupplungsleitung verbunden.

Diese Prozesse können je nach Bauart der Kupplungsvorrichtungen der Fahrzeuge gleichzeitig oder zeitlich getrennt voneinander und außerdem automatisch oder von Hand erfolgen.

Sobald Fluid - hier Luft - durch die eine Kupplungsleitung strömt, wird dieses Fluid mittels der vom Kupplungsträger gehaltenen Fluidaufbereitungseinrichtung 23, die die im Fluidströmungspfad der einen Kupplungsleitung angeordnete Fluidaufbereitungseinheit aufweist, aufbereitet, insbesondere getrocknet und/oder gefiltert.

Außerdem wird mittels der weiteren Fluidaufbereitungseinheit der Fluidaufbereitungseinrichtung, die im Fluidströmungspfad der weiteren Kupplungsleitung angeordnet ist, durch die weitere Kupplungsleitung strömendes Fluid - hier Luft - aufbereitet, insbesondere getrocknet und/oder gefiltert.

Erfindungsgemäß ist also vorgesehen beim Kuppeln zweier Fahrzeuge die erfindungsgemäße Übergangskupplung 13; 53; 83 als Filter-Segment ("Filtermodul") zwischen den Kupplungsvorrichtungen der beiden Fahrzeuge zu befestigen.

Das Filtermodul könnte dabei, beispielsweise hinsichtlich der Abschleppgeschwindigkeit, speziell für Abschleppvorgänge ausgebildet sein. Das Filtermodul trägt dabei die Komponenten, die für die Dauer des Abschleppvorganges das Fluid entsprechend aufbereiten. Ein solcher modularer Aufbau erleichtert die Handhabbarkeit. Die in den Figuren 2 und 5 gezeigte Adapterkupplung 43 kann alleine schon bis zu 50 kg wiegen. Bei einem Abschleppvorgang würde zuerst die Adapterkupplung 43 an der Kupplung 44 (hier SA-3-Kupplung) des ersten Fahrzeugs montiert werden und im Anschluss würde dann die erfindungsgemäße Übergangskupplung 53 (das Filtermodul) montiert werden.

Diese Modularität hat außerdem den Vorteil, dass, falls die Fluidqualität doch ausreichend ist, das Filtermodul auch verstaut bleiben kann.

## Patentansprüche

1. Fluidleitungssystem (FLS)
mit einer Fluidleitung (21; 56; 86) und
mit einer im Fluidströmungspfad der einen Fluidleitung (21; 56; 86) angeordneten Fluidaufbereitungsanordnung (FAA.1),
bei dem eine Fluidaufbereitungseinheit (24.1) und eine Strömungsbegrenzungseinheit (SBE.1) der einen Fluidaufbereitungsanordnung im Fluidströmungspfad eines Leitungsabschnitts (LA.1) der einen Fluidleitung (21; 56; 86) in Reihe angeordnet sind,
**dadurch ekennzeichnet,**
dass die eine Fluidaufbereitungsanordnung (FAA.1) eine Bypassleitung (BL.1) aufweist, die den Leitungsabschnitt (LA.1) überbrückt, und
dass im Fluidströmungspfad der einen Bypassleitung (BL.1) eine Strömungsdiode (SD.1) angeordnet ist, deren Strömungswiderstand dem Strömungswiderstand der einen Strömungsbegrenzungseinheit (SBE.1) entgegengerichtet ist.

2. Fluidleitungssystem (FLS) nach Anspruch 1,
**gekennzeichnet durch**
eine weitere Fluidleitung (22; 57; 87) und
eine im Fluidströmungspfad der weiteren Fluidleitung (22; 57; 87) angeordnete weitere Fluidaufbereitungsanordnung (FAA.2),
bei dem eine weitere Fluidaufbereitungseinheit (24.2) und eine weitere Strömungsbegrenzungseinheit (SBE.2) im Fluidströmungspfad eines weiteren Leitungsabschnitts (LA.2) der weiteren Fluidleitung (22; 57; 87) in Reihe angeordnet sind,
bei dem die weitere Fluidaufbereitungsanordnung (FAA.2) eine weitere Bypassleitung (BL.2) aufweist, die den weiteren Leitungsabschnitt (LA.2) überbrückt, und
bei dem im Fluidströmungspfad der weiteren Bypassleitung (BL.2) eine weitere Strömungsdiode (SD.2) angeordnet ist, deren Strömungswiderstand dem Strömungswiderstand der weiteren Strömungsbegrenzungseinheit (SBE.2) entgegengerichtet ist.

3. Fluidleitungssystem (FLS) nach einem der Ansprüche 1 oder 2,
**dadurch gekennzeichnet, dass** die eine Strömungsbegrenzungseinheit (SBE.1) der einen Fluidaufbereitungsanordnung (FAA.1) und/oder die weitere Strömungsbegrenzungseinheit (SBE.2) der weiteren Fluidaufbereitungsanordnung (FAA.2) ein Rückschlagventil oder eine Strömungsdiode ist.

4. Übergangskupplung (15; 53; 83) zum Kuppeln von Kupplungsvorrichtungen (7, 12; 37, 42; 67, 72) zweier Fahrzeuge (2, 3; 32, 33; 62, 63) mit einer Kupplungsleitung zum Verbinden von Fluidleitungen (5, 10; 35, 40; 65, 70) der beiden Fahrzeuge,
**gekennzeichnet, durch**
ein Fluidleitungssystem nach einem der Ansprüche 1 bis 3, wobei die eine Fluidleitung (21; 56; 86) des Fluidleitungssystem, im Fluidströmungspfad derer die eine Fluidaufbereitungsanordnung (FAA.1) angeordnet ist, die eine Kupplungsleitung ist.

5. Übergangskupplung (15; 53; 83) nach Anspruch 4, **gekennzeichnet, durch**
eine weitere Kupplungsleitung zum Verbinden weiterer Fluidleitungen (6, 11; 36, 41; 66, 71) der beiden Fahrzeuge, wobei die weitere Fluidleitung (22; 57; 87) des Fluidleitungssystem, im Fluidströmungspfad derer die weitere Fluidaufbereitungsanordnung (FAA.2) angeordnet ist, die weitere Kupplungsleitung ist.

6. Übergangskupplung (15; 53; 83) nach einem der Ansprüche 4 oder 5,
**gekennzeichnet, durch**
eine erste Verbindungseinrichtung (16; 52; 82) zum lösbaren Verbinden der Übergangskupplung mit einer ersten (7; 37; 67) der Kupplungsvorrichtungen,
eine zweite Verbindungseinrichtung (18; 54; 84) zum lösbaren Verbinden der Übergangskupplung mit einer zweiten (12; 42; 72) der Kupplungsvorrichtungen und
einen Kupplungsträger (20; 55; 85) zum Verbinden der ersten Verbindungseinrichtung (16; 52; 82) mit der zweiten Verbindungseinrichtung (18; 54; 84),
wobei die eine Fluidaufbereitungsanordnung (FAA.1) und/oder die weitere Fluidaufbereitungsanordnung (FAA.2) Teil einer vom Kupplungsträger (20; 55; 85) gehaltenen Fluidaufbereitungseinrichtung (23; 23a; 23b) sind.

7. Fahrzeugverbund (1; 31; 61) mit zumindest zwei Fahrzeugen (2, 3; 32, 33; 62, 63), deren Kupplungsvorrichtungen (7, 12; 37, 42; 67, 72) mittels einer Übergangskupplung (15; 53; 83) gekuppelt sind,
**dadurch gekennzeichnet, dass** die Übergangskupplung (15; 53; 83) nach einem der Ansprüche 4 bis 6 ausgebildet ist.

8. Verfahren zum Aufbereiten eines Fluids, das durch eine Fluidleitung (21; 56; 86) strömt, mittels einer im Fluidströmungspfad der einen Fluidleitung (21; 56; 86) angeordneten Fluidaufbereitungsanordnung (FAA.1),
bei dem eine Fluidaufbereitungseinheit (24.1) und eine Strömungsbegrenzungseinheit (SBE.1) der einen Fluidaufbereitungsanordnung (FAA.1) im Fluidströmungspfad eines Leitungsabschnitts (LA.1) der einen Fluidleitung (21; 56; 86) in Reihe angeordnet werden,
**dadurch gekennzeichnet,**
**dass** der eine Leitungsabschnitt (LA.1) durch eine Bypassleitung (BL.1) der einen Fluidaufbereitungsanordnung (FAA.1) überbrückt wird, und
**dass** im Fluidströmungspfad der einen Bypassleitung (BL.1) eine Strömungsdiode (SD.1) so angeordnet wird, dass deren Strömungswiderstand dem Strömungswiderstand der einen Strömungsbegrenzungseinheit (SBE.1) entgegengerichtet ist.

9. Verfahren nach Anspruch 8,
**dadurch gekennzeichnet,**
**dass** ein Fluid, das durch eine weitere Fluidleitung (22; 57; 87) strömt, mittels einer im Fluidströmungspfad der weiteren Fluidleitung (22; 57; 87) angeordneten weiteren Fluidaufbereitungsanordnung (FAA.2) aufbereitet wird, dass eine weitere Fluidaufbereitungseinheit (24.2) und eine weitere Strömungsbegrenzungseinheit (SBE.2) der weiteren Fluidaufbereitungsanordnung (FAA.2) im Fluidströmungspfad eines weiteren Leitungsabschnitts (LA.2) der weiteren Fluidleitung (22; 57; 87) in Reihe angeordnet werden,
**dass** der weitere Leitungsabschnitt (LA.2) durch eine weitere Bypassleitung (BL.2) der weiteren Fluidaufbereitungsanordnung (FAA.2) überbrückt wird, und
**dass** im Fluidströmungspfad der weiteren Bypassleitung (BL.2) eine weitere Strömungsdiode (SD.2) so angeordnet wird, dass deren Strömungswiderstand dem Strömungswiderstand der weiteren Strömungsbegrenzungseinheit (SBE.2) entgegengerichtet ist.

10. Verfahren nach einem der Ansprüche 8 oder 9,
**dadurch gekennzeichnet,**
**dass** die eine Fluidleitung (21; 56; 86), im Fluidströmungspfad derer die eine Fluidaufbereitungsanordnung (FAA.1) angeordnet wurde, als eine Kupplungsleitung ausgebildet wird, die Teil einer Kupplungsvorrichtung (7, 12; 37, 42; 67, 72) ist, die zum Kuppeln zweier Fahrzeuge (2, 3; 32, 33; 62, 63) dient, wobei die Fluidleitungen (5, 10; 35, 40; 65, 70) der beiden Fahrzeuge mittels der einen Kupplungsleitung verbunden werden, und/oder dass die weitere Fluidleitung (22; 57; 87), im Fluidströmungspfad derer die weitere Fluidaufbereitungsanordnung (FAA.2) angeordnet wurde, als eine weitere Kupplungsleitung ausgebildet wird, die Teil der Kupplungsvorrichtung (7, 12; 37, 42; 67, 72) ist, die zum Kuppeln der beiden Fahrzeuge (2, 3; 32, 33; 62, 63) dient, wobei die weiteren Fluidleitungen (5, 10; 35, 40; 65, 70) der beiden Fahrzeuge mittels der weiteren Kupplungsleitung verbunden werden.

## Claims

1. Fluid line system (FLS)
having a fluid line (21; 56; 86) and
having a fluid processing assembly (FAA.1) arranged in the fluid flow path of the one fluid line (21; 56; 86),
wherein a fluid processing unit (24.1) and a flow limiting unit (SBE.1) of the one fluid processing assembly are arranged in series in the fluid flow path of a line segment (LA.1) of the one fluid line (21; 56; 86),
**characterised in that**
the one fluid processing assembly (FAA.1) has a bypass line (BL.1), which bypasses the line segment (LA.1), and
a flow diode (SD.1) is arranged in the fluid flow path of the one bypass line (BL.1), the direction of its flow resistance being counter to the direction of the flow resistance of the one flow limiting unit (SBE.1).

2. Fluid line system (FLS) according to claim 1,
**characterised by**
a further fluid line (22; 57; 87) and
a further fluid processing assembly (FAA.2) arranged in the fluid flow path of the further fluid line (22; 57; 87), wherein a further fluid processing unit (24.2) and a further flow limiting unit (SBE.2) are arranged in series in the fluid flow path of a further line segment (LA.2) of the further fluid line (22; 57; 87),
wherein the further fluid processing assembly (FAA.2) has a further bypass line (BL.2), which bypasses the further line segment (LA.2), and
wherein a further flow diode (SD.2) is arranged in the fluid flow path of the further bypass line (BL.2), the direction of its flow resistance being counter to the direction of the flow resistance of the further flow limiting unit (SBE.2).

3. Fluid line system (FLS) according to one of claims 1 or 2,
**characterised in that**
the one flow limiting unit (SBE.1) of the one fluid processing assembly (FAA.1) and/or the further flow limiting unit (SBE.2) of the further fluid processing assembly (FAA.2) is a non-return valve or a flow diode.

4. Transitional coupling (15; 53; 83) for coupling coupling devices (7, 12; 37, 42; 67, 72) of two vehicles (2, 3; 32, 33; 62, 63) having a coupling line for connecting fluid lines (5, 10; 35, 40; 65, 70) of the two vehicles,
**characterised by**
a fluid line system according to one of claims 1 to 3, wherein the one fluid line (21; 56; 86) of the fluid line system, in the fluid flow path of which the one fluid processing assembly (FAA.1) is arranged, is the one coupling line.

5. Transitional coupling (15; 53; 83) according to claim 4, **characterised by**
a further coupling line for connecting further fluid lines (6, 11; 36, 41; 66, 71) of the two vehicles,
wherein the further fluid line (22; 57; 87) of the fluid line system, in the fluid flow path of which the further fluid processing assembly (FAA.2) is arranged, is the further coupling line.

6. Transitional coupling (15; 53; 83) according to one of claims 4 or 5,
**characterised by**
a first connecting facility (16; 52; 82) for the releasable connection of the transitional coupling to a first (7; 37; 67) of the coupling devices,
a second connecting facility (18; 54; 84) for the releasable connection of the transitional coupling to a second (12; 42; 72) of the coupling devices and
a coupling support (20; 55; 85) for connecting the first connecting facility (16; 52; 82) to the second connecting facility (18; 54; 84),
wherein the one fluid processing assembly (FAA.1) and/or the further fluid processing assembly (FAA.2) are part of a fluid processing facility (23; 23a; 23b) held by the coupling support (20; 55; 85).

7. Vehicle combination (1; 31; 61) having at least two vehicles (2, 3; 32, 33; 62, 63), the coupling devices (7, 12; 37, 42; 67, 72) of which are coupled by means of a transitional coupling (15; 53; 83),
**characterised in that**
the transitional coupling (15; 53; 83) is configured according to one of claims 4 to 6.

8. Method for processing a fluid that flows through a fluid line (21; 56; 86) by means of a fluid processing assembly (FAA.1) arranged in the fluid flow path of the one fluid line (21; 56; 86),
wherein a fluid processing unit (24.1) and a flow limiting unit (SBE.1) of the one fluid processing assembly (FAA.1) are arranged in series in the fluid flow path of a line segment (LA.1) of the one fluid line (21; 56; 86),
**characterised in that**
the one line segment (LA.1) is bypassed by a bypass line (BL.1) of the one fluid processing assembly (FAA.1) and
a flow diode (SD.1) is arranged in the fluid flow path of the one bypass line (BL.1) in such a manner that the direction of its flow resistance is counter to the direction of the flow resistance of the one flow limiting unit (SBE.1).

9. Method according to claim 8,
**characterised in that**
a fluid that flows through a further fluid line (22; 57; 87) is processed by means of a further fluid processing assembly (FAA.2) arranged in the fluid flow path of the further fluid line (22; 57; 87),
a further fluid processing unit (24.2) and a further flow limiting unit (SBE.2) of the further fluid processing assembly (FAA.2) are arranged in series in the fluid flow path of a further line segment (LA.2) of the further fluid line (22; 57; 87),
the further line segment (LA.2) is bypassed by a further bypass line (BL.2) of the further fluid processing assembly (FAA.2) and
a further flow diode (SD.2) is arranged in the fluid flow path of the further bypass line (BL.2) in such a manner that the direction of its flow resistance is counter to the direction of the flow resistance of the further flow limiting unit (SBE.2).

10. Method according to one of claims 8 or 9,
**characterised in that**
the one fluid line (21; 56; 86), in the fluid flow path of which the one fluid processing assembly (FAA.1) has been arranged, is configured as a coupling line, which is part of a coupling device (7, 12; 37, 42; 67, 72) which serves to couple two vehicles (2, 3; 32, 33; 62, 63), with the fluid lines (5, 10; 35, 40; 65, 70) of the two vehicles being connected by means of the one coupling line and/or the further fluid line (22; 57; 87), in the fluid flow path of which the further fluid processing assembly (FAA.2) has been arranged, is configured as a further coupling line, which is part of the coupling device (7, 12; 37, 42; 67, 72) which serves to couple the two vehicles (2, 3; 32, 33; 62, 63), with the further fluid lines (5, 10; 35, 40; 65, 70) of the two vehicles being connected by means of the further coupling line.

## Revendications

1. Système (FLS) à conduit de fluide
comprenant un conduit (21; 56; 86) de fluide et
comprenant un dispositif (FAA.1) de préparation de fluide monté dans le trajet d'écoulement de fluide du un conduit (21, 56, 86) de fluide,
dans lequel une unité (24.1) de préparation de fluide et une unité (SBE.1) de limitation du courant du un dispositif de préparation de fluide sont montées en série dans le trajet d'écoulement de fluide d'un tronçon (LA.1) du un conduit (21; 56; 86) de fluide,
**caractérisé**
**en ce que** le un dispositif (FAA.1) de préparation de fluide a un conduit (BL.1) de dérivation qui contourne le tronçon (LA.1) de conduit et
**en ce qu'**il est monté, dans le trajet d'écoulement de fluide du un conduit (BL.1) de dérivation, une diode (SD.1) d'écoulement dont la résistance à l'écoulement est opposée à la résistance à l'écoulement de l'unité (SBE.1) de limitation de l'écoulement.

2. Système (FLS) à conduit de fluide suivant la revendication 1,
**caractérisé par**
un autre conduit (22; 57; 87) de fluide et
un autre dispositif (FAA.2) de préparation de fluide monté dans le trajet d'écoulement du fluide de l'autre conduit (22; 57; 87) de fluide,
dans lequel une autre unité (24.2) de préparation de fluide et une autre unité (SBE.2) de limitation de l'écoulement sont montées en série dans le trajet d'écoulement de fluide d'un autre tronçon (LA.2) de l'autre conduit (22; 57; 87) de fluide,
dans lequel l'autre dispositif (FAA.2) de préparation de fluide a un autre conduit (BL.2) de dérivation qui contourne l'autre tronçon (LA.2) de conduit et
dans lequel il est monté, dans le trajet d'écoulement de fluide de l'autre conduit (BL.2) de dérivation, une autre diode (SD.2) d'écoulement dont la résistance à l'écoulement est dirigée de manière opposée à la résistance à l'écoulement de l'autre unité (SBE.2) de limitation de l'écoulement.

3. Système (FLS) à conduit de fluide suivant la revendication 1 ou 2,
**caractérisé en ce que**
la une unité (SBE.1) de limitation de l'écoulement, le un dispositif (FAA.1) de préparation de fluide et/ou l'autre unité (SBE.2) de limitation d'écoulement de l'autre dispositif (FAA.2) de préparation de fluide est un clapet antiretour ou une diode d'écoulement.

4. Accouplement (15; 53; 83) de transition pour accoupler des dispositifs (7, 12; 37, 42; 67, 72) d'accouplement de deux véhicules (2, 3; 32, 33; 62, 63) ayant un conduit d'accouplement pour relier des conduits (5, 10; 35, 40; 65, 70) de fluide des deux véhicules,
**caractérisé par**
un système à conduit de fluide suivant l'une des revendications 1 à 3, le un conduit (21; 56; 86) de fluide du système à conduit de fluide étant monté dans le trajet d'écoulement de fluide, dans lequel est monté le un dispositif (FAA.1) de préparation de fluide, qui est un conduit d'accouplement.

5. Accouplement (15; 53; 83) de transition suivant la revendication 4,
**caractérisé par**
un autre conduit d'accouplement pour relier d'autres conduits (6, 11; 36, 41; 66,71) de fluide des deux véhicules, l'autre conduit (22; 57; 87) de fluide du système à fluide étant monté dans le trajet d'écoulement de fluide dans lequel est monté l'autre dispositif (FAA.2) de préparation de fluide, qui est l'autre conduit d'accouplement.

6. Accouplement (15; 53; 83) de transition suivant l'une des revendications 4 ou 5,
**caractérisé par**
un premier dispositif (12; 52; 82) de liaison pour relier de manière amovible l'accouplement de transition à un premier (7; 37; 67) des dispositifs d'accouplement,
un deuxième dispositif d'accouplement (18; 54; 84) de liaison pour relier de manière amovible l'accouplement de transition à un deuxième (12 ; 42 ; 72) des dispositifs d'accouplement et
un support (20; 55; 85) d'accouplement pour relier le premier dispositif (16; 52; 82) de liaison au deuxième dispositif (18; 54; 84) de liaison,
dans lequel le dispositif (FAA.1) de préparation de fluide et/ou l'autre dispositif (FAA.2) de préparation de fluide font partie d'un dispositif (23; 23a; 23b) de préparation de fluide retenu par le support (20; 55; 85) d'accouplement.

7. Convoi (1; 31; 61) de véhicule ayant au moins deux véhicules (2, 3; 32, 33; 62, 63) dont les dispositifs (7, 12; 37, 42; 67, 72) d'accouplement sont accouplés au moyen d'un accouplement (15; 53; 83) de transition, **caractérisé en ce que** l'accouplement (15; 53; 83) de transition est constitué suivant l'une des revendications 4 à 6.

8. Procédé de préparation d'un fluide qui passe dans un conduit (21; 56; 86) de fluide au moyen d'un dispositif (FAA.1) de préparation de fluide monté dans le trajet d'écoulement de fluide du un conduit (21; 56; 86) de fluide, dans lequel
une unité (24.1) de préparation de fluide et une unité (SBE.1) de limitation de l'écoulement du un dispositif (FAA.1) de préparation de fluide sont montées en série dans le trajet d'écoulement du fluide d'un tronçon (LA.1) du un conduit (21; 56; 86) de fluide,
**caractérisé**
**en ce que** le un tronçon (LA.1) de conduit est contourné par un conduit (BL.1) de dérivation du un dispositif (FAA.1) de préparation de fluide, et
**en ce que** il est monté, dans le trajet d'écoulement du fluide du un conduit (BL.1) de dérivation, une diode (SD.1) d'écoulement, dont la résistance à l'écoulement est dirigée de manière opposée à la résistance à l'écoulement de la une unité (SBE.1) de limitation de l'écoulement.

9. Procédé suivant la revendication 8,
**caractérisé**
**en ce qu'**un fluide qui passe qui passe dans un autre conduit (22; 57; 87) de fluide est préparé au moyen d'un autre dispositif (FAA.2) de préparation de fluide
autre conduit (22; 57; 87) de fluide monté dans le trajet d'écoulement de fluide de l'autre conduit (22; 57; 87) de fluide,
**en ce qu'**une autre unité (24.2) de préparation de fluide et une autre unité (SBE.2) de limitation de l'écoulement de l'autre dispositif (FAA.2) de préparation de fluide sont montées en série dans le trajet d'écoulement de fluide d'un autre tronçon (LA.2) de l'autre conduit (22; 57; 87) de fluide,
**en ce que** l'autre tronçon (LA.2) de conduit est contourné par un autre conduit (BL.2) de dérivation de l'autre dispositif (FAA.2) de préparation de fluide, et
**en ce qu'**il est monté, dans le trajet découlement de fluide de l'autre conduit (BL.2) de dérivation, une autre diode (SD.2) d'écoulement de manière à ce que sa résistance à l'écoulement soit dirigée de manière opposée à la résistance à l'écoulement de l'autre unité (SBE.2) de limitation de l'écoulement.

10. Procédé suivant l'une des revendications 8 ou 9,
**caractérisé**
**en ce qu'**un conduit (21; 56; 86) de fluide est dans le trajet d'écoulement de fluide dans lequel le un dispositif (FAA.1) de préparation de fluide a été monté, en tant qu'un conduit d'accouplement qui fait partie d'un dispositif (7, 12; 37, 42; 67, 72) d'accouplement, qui sert à accoupler deux véhicules (2, 3; 32, 33; 62, 63), les conduits (5, 10; 35, 40; 65, 70) de fluide des deux véhicules étant reliés au moyen d'un conduit d'accouplement, et/ou
**en ce que** l'autre conduit (22; 57; 87) de fluide est constitué dans le trajet d'écoulement de fluide dans lequel l'autre dispositif (FAA.2) de préparation de fluide a été monté, en tant qu'un autre conduit d'accouplement qui fait partie du dispositif (7, 12; 37, 42; 67, 72) d'accouplement qui sert à accoupler les deux véhicules (2, 3; 32, 33; 62, 63), les autres conduits (5, 10; 35, 40; 65, 70) de fluide des deux véhicules étant reliés au moyen de l'autre conduit d'accouplement.
